(19) Europäisches Patentamt
European Patent Office
Office européen des brevets

(11) **EP 4 668 876 A1**

(12) **EUROPEAN PATENT APPLICATION**
published in accordance with Art. 153(4) EPC

(43) Date of publication:
**24.12.2025 Bulletin 2025/52**

(21) Application number: **23921926.4**

(22) Date of filing: **16.02.2023**

(51) International Patent Classification (IPC):
*H04W 52/02* *(2009.01)*

(52) Cooperative Patent Classification (CPC):
**H04W 52/02;** Y02D 30/70

(86) International application number:
**PCT/CN2023/076632**

(87) International publication number:
**WO 2024/168772 (22.08.2024 Gazette 2024/34)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Beijing Xiaomi Mobile Software Co.,
Ltd.**
**Beijing 100085 (CN)**

(72) Inventor: **GUO, Shengxiang**
**Beijing 100085 (CN)**

(74) Representative: **Dehns Germany Partnerschaft
mbB**
**Theresienstraße 6-8**
**80333 München (DE)**

(54) **SIGNAL SEQUENCE DETERMINATION METHODS AND APPARATUSES**

(57)    Signal sequence determination methods and apparatuses. A method comprises: receiving a low-power-consumption wake-up signal sent by a network device, and determining a generation sequence of the low-power-consumption wake-up signal. The present disclosure can flexibly adjust the energy threshold by determining a generation sequence of a low-power-consumption wake-up signal.

FIG. 2

**Description**

**TECHNICAL FIELD**

The present disclosure relates to the field of communication technologies, and in particular, to a signal sequence determination method and apparatus.

**BACKGROUND**

In a wireless communication system, to reduce power consumption of a terminal, a power saving signal such as a wake-up signal (wake-up signaling, WUS) is introduced in 3GPP (3rd Generation Partnership Project). The WUS signal is a detection signal with low power consumption, and if the terminal detects the WUS signal, a main radio is enabled; or if the WUS signal is not received, or the WUS indicates not to wake up, the terminal may keep the main radio in a sleep state. Thus, the WUS signal plays an important role in a waking-up process of the main radio.

**SUMMARY**

The present disclosure provides a signal sequence determination method and apparatus to overcome problems in related arts.

According to a first aspect of embodiments of the present disclosure, a signal sequence determination method is provided, where the method is performed by a terminal and includes:

receiving a low-power wake-up signal sent by a network device; and
determining a generation sequence of the low-power wake-up signal.

According to a second aspect of embodiments of the present disclosure, a signal sequence determination method is provided, where the method is performed by a network device and includes:
sending a low-power wake-up signal to a terminal, where the low-power wake-up signal is used by the terminal to determine a generation sequence of the low-power wake-up signal.

According to a third aspect of embodiments of the present disclosure, a signal sequence determination apparatus is provided, where the apparatus includes:

a receiving module, configured to receive a low-power wake-up signal sent by a network device; and
a processing module, configured to determine a generation sequence of the low-power wake-up signal.

According to a fourth aspect of embodiments of the present disclosure, a signal sequence determination apparatus is provided, where the apparatus includes:
a sending module, configured to send a low-power wake-up signal to a terminal, where the low-power wake-up signal is used by the terminal to determine a generation sequence of the low-power wake-up signal.

According to a fifth aspect of embodiments of the present disclosure, a terminal is provided, including:

one or more first processor; and
a first memory for storing a first-processor-executable instruction;
where the one or more first processor is configured to execute the executable instruction to implement the signal sequence determination method according to the first aspect of the present disclosure.

According to a sixth aspect of embodiments of the present disclosure, a network device is provided, including:

one or more second processor; and
a second memory for storing a second-processor-executable instruction;
where the one or more second processor is configured to execute the executable instruction to implement the signal sequence determination method according to the second aspect of the present disclosure.

According to a seventh aspect of embodiments of the present disclosure, a computer-readable storage medium is provided, storing a computer program instruction, where when the program instruction is executed by one or more processor, steps of the signal sequence determination method according to the first aspect or the second aspect of the present disclosure are implemented.

The technical solutions provided in the embodiments of the present disclosure may include the following beneficial effects: the terminal may receive the low-power wake-up signal sent by the network device, and may determine the generation sequence of the low-power wake-up signal, and then may flexibly adjust an energy threshold by determining the generation sequence corresponding to the low-power wake-up signal.

It shall be noted that the above general description and the following detailed description are examples and explanatory only and are not restrictive of the present disclosure.

## BRIEF DESCRIPTION OF DRAWINGS

The above aspects and other aspects and advantages of embodiments of the present disclosure will become apparent and more readily appreciated from the following descriptions made with reference to the drawings.

FIG. 1 is an application scenario applicable to a signal sequence determination method according to some embodiments.
FIG. 2 is a flowchart of a signal sequence determination method according to some embodiments.
FIG. 3 is a flowchart of a signal sequence determination method according to some other embodiments.
FIG. 4 is a flowchart of a signal sequence determination method according to some other embodiments.
FIG. 5 is a flowchart of a signal sequence determination method according to some other embodiments.
FIG. 6 is a flowchart of a signal sequence determination method according to some other embodiments.
FIG. 7 is a flowchart of a signal sequence determination method according to some other embodiments.
FIG. 8 is a flowchart of a signal sequence determination method according to some other embodiments.
FIG. 9 is a flowchart of a signal sequence determination method according to some other embodiments.
FIG. 10 is a flowchart of a signal sequence determination method according to some other embodiments.
FIG. 11 is a flowchart of a signal sequence determination method according to some other embodiments.
FIG. 12 is a flowchart of a signal sequence determination method according to some other embodiments.
FIG. 13 is a flowchart of a signal sequence determination method according to some embodiments.
FIG. 14 is a block diagram of a signal sequence determination apparatus according to some embodiments.
FIG. 15 is a block diagram of a signal sequence determination apparatus according to some embodiments.
FIG. 16 is a block diagram of a terminal according to some embodiments.
FIG. 17 is a block diagram of a network device according to some embodiments.

## DETAILED DESCRIPTION

Example embodiments will be described in detail herein, examples of which are illustrated in the accompanying drawings. When following description refers to the drawings, unless otherwise indicated, same numerals in different drawings indicate same or similar elements. The implementations set forth in the following description of example embodiments do not represent all implementations consistent with the present disclosure. Instead, they are merely examples of apparatuses and methods consistent with aspects related to the present disclosure as recited in the appended claims.

In the description of the present disclosure, terms such as "first" and "second" are used to distinguish similar objects, and are not necessarily understood as a specific order or sequence. In addition, unless indicated to the contrary, in the description with reference to the accompanying drawings, the same reference numerals in different drawings represent the same elements.

In the description of the present disclosure, unless otherwise stated, "a plurality of" means two or more, and other quantifiers are similar thereto; "at least one item (piece)", "one item (piece) or multiple items (pieces)" or similar expressions thereof means any combination of these items (pieces), including any combination of a single item (piece) or multiple items (pieces). For example, at least one item (piece) may represent any quantity; for another example, one or more items (pieces) of a, b, and c may represent: a, b, c, a-b, a-c, b-c, or a-b-c, where a, b, and c may be singular or plural; and "and/or" is an association relationship describing associated objects, indicating that three possible relationships may exist, for example, A and/or B may represent three cases: A exists alone, both A and B exist, and B exists alone, where A and B may be singular or plural.

Although the operations or steps are described in a specific order in the drawings in the embodiments of the present disclosure, they should not be understood as requiring these operations or steps to be performed in the specific order shown or in a serial order, or requiring all the operations or steps shown to be performed to obtain a desired result. In the embodiments of the present disclosure, these operations or steps may be performed serially; or these operations or steps may be performed in parallel; or some of these operations or steps may be performed.

The following first describes an implementation environment of the embodiments of the present disclosure.

The technical solutions of the embodiments of the present disclosure may be applied to various communication systems. The communication system may include one or more of a 4G (fourth generation) communication system, a 5G (fifth generation) communication system, and another future wireless communication system (for example, 6G). The communication system may alternatively include one or more of a public land mobile network (PLMN) network, a device to device (D2D) communication system, a machine to machine (M2M) communication system, an Internet of Things (IoT) communication system, a vehicle to everything (V2X) communication system, or another communication system.

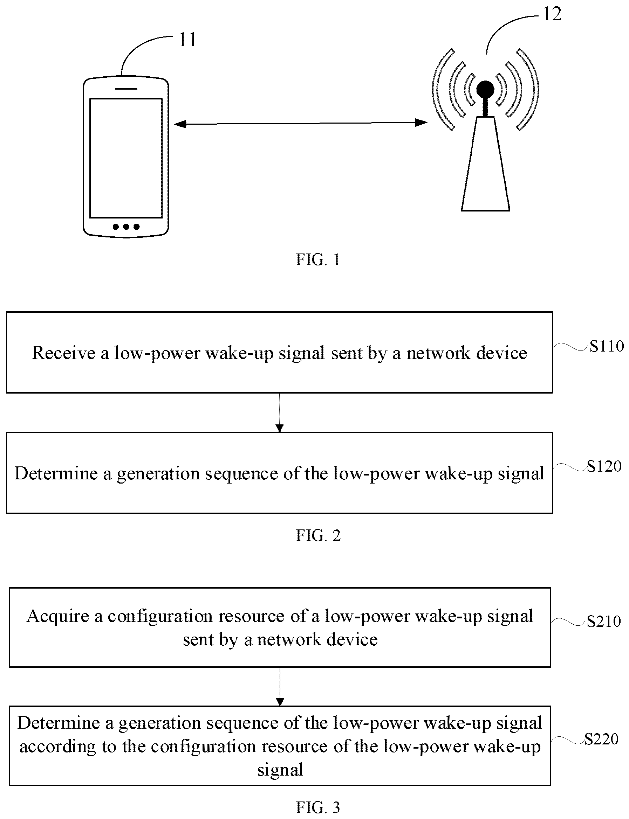

FIG. 1 is a schematic diagram of a communication system according to an example embodiment. As shown in FIG. 1, the communication system may include a terminal 11 and a network device 12. The communication system may be configured to support a 4G network access technology, for example, a long term evolution (LTE) access technology, or a 5G network access technology, for example, a new radio access technology (New RAT), or another future wireless communication technology. It should be noted that, in the communication system, there may be one or more network devices 12 and one or more terminals 11, and a quantity of network devices 12 and a quantity of terminals 11 in the communication system shown in FIG. 1 are merely adaptive examples, which is not limited in the present disclosure.

The network device 12 in FIG. 1 may be configured to support access to the terminal 11, for example, the network device 12 may be an evolved NodeB (eNB or eNodeB) in LTE; the network device 12 may also be a next generation NodeB (gNB or gNodeB) in a 5G network; the network device 12 may also be a radio access network (NG Radio Access Network, NG-RAN) device in a 5G network; the network device 12 may also be a base station, a broadband network gateway (BNG), an aggregation switch, or a non-3GPP (3rd Generation Partnership Project) access device in a future evolved public land mobile network (PLMN).

Optionally, the network device 12 in the embodiments of the present disclosure may include various types of base stations, for example, a macro base station, a micro base station (also referred to as a small station), a relay station, an access point, a 5G base station or a future base station, a satellite, a transmitting and receiving point (TRP), a transmitting point (TP), a mobile switching center, a device to device (D2D), a machine to machine (M2M), an Internet of Things (IoT), a vehicle to everything (V2X) or other devices that undertake a base station function, etc., which is not specifically limited in the embodiments of the present disclosure. For ease of description, in all embodiments of the present disclosure, the devices providing the wireless communication function for the terminal 11 are collectively referred to as the network device 12 or the base station.

The terminal 11 in FIG. 1 may be an electronic device that provides voice or data connectivity, for example, the terminal 11 may also be referred to as user equipment (UE), a subscriber unit, a mobile station, a station, or a terminal. For example, the terminal 11 may include a smartphone, a smart wearable device, a smart speaker, a smart tablet, a wireless modem, a wireless local loop (WLL) station, a personal digital assistant (PDA), a customer premise equipment (CPE), and the like. With the development of wireless communication technologies, a device that can access a communication system, can communicate with a network device of the communication system, and can communicate with other objects through the communication system, or a device that can directly communicate between two or more devices may be the terminal 11 in the embodiments of the present disclosure; for example, a terminal and a vehicle in intelligent transportation, a household device in a smart home, a power meter reading instrument in a smart grid, a voltage monitoring instrument, an environment monitoring instrument, a video monitoring instrument in an intelligent security network, or a cash register. In the embodiment of the present disclosure, the terminal 11 may communicate with the network device 12. A plurality of terminals 11 may also communicate with each other. The terminal 11 may be statically fixed or mobile, which is not limited in the present disclosure.

In an embodiment, the terminal 11 in FIG. 1 may be a terminal that supports a power saving function, and the terminal may include a low-power (LP) wake-up receiver (WUR) and a main radio (MR), where the wake-up receiver may be referred to as a LP-WUR. For example, when no data is to be sent or received by the terminal 11, the main radio may be in sleep states to different degrees.

In an implementation, the sleep state of the terminal 11 may include one or more of ultra-deep sleep, deep sleep, light sleep, and micro sleep. It takes different times for the main radio of the terminal 11 to wake up from different sleep states. In addition, due to different hardware or software capabilities for the terminals 11, it takes different times for different terminals 11 to wake up from a same sleep state.

It should be noted that the terminal 11 may be in a wake-up state after being woken up, and the wake-up state of the terminal 11 may be considered as a state different from the sleep state, or may be considered as a special form of the sleep state, which is not limited in the present disclosure.

It should be further noted that the main radio may include a main transceiver and/or a main receiver, there may be one or more main transceivers, and there may also be one or more main receivers.

The terminal 11 in FIG. 1 may support receiving a low-power WUS signal.

In an embodiment, the terminal may receive the WUS signal using a main radio (main transceiver and/or main receiver).

In another embodiment, the terminal may receive the WUS signal by using a separate receiver, and receive a downlink signal and send an uplink signal by using a main transceiver, or may receive a downlink signal by using a main receiver, where the main receiver and/or the main transceiver may be referred to as the main radio of the terminal. If the terminal receives the WUS signal instructing the terminal to wake up, the terminal enables the main transceiver to receive and send downlink/uplink information, or enables the main receiver to receive and process downlink information; or if the terminal does not receive a WUS signal, or if the WUS signal instructs the terminal not to wake up, the terminal maintains a sleep state of the main transceiver and/or the main receiver, where the WUS signal may be applied to any state of the terminal, for example, an RRC (Radio Resource Control) connected state, an RRC idle state, or an RRC inactive state.

In some implementations, there may be various manners for configuring a resource for the low-power wake-up signal, and in a case of poor signal condition quality, more PRB (Physical Resource Block) resources are configured for the low-power wake-up signal, to improve transmission reliability; or in a case of poor signal condition quality, fewer PRB resources are configured for the low-power wake-up signal, to save more frequency-domain resources.

The low-power wake-up signal is usually generated by using a generation sequence, and due to a limitation of a modulation manner, the generation sequence is related to an actually transmitted PRB resource, and for a given PRB resource, the more energy the generation sequence accumulates in time domain, the more favorable it becomes for signal transmission. In addition, in a way that the terminal determines the generation sequence of the low-power wake-up signal, an energy threshold can be effectively determined, that is, some references can be provided for determining the energy threshold. Therefore, the generation sequence used by the low-power wake-up signal needs to be further clarified.

FIG. 2 is a flowchart of a signal sequence determination method according to some embodiments. As shown in FIG. 2, the signal sequence determination method may be performed by a terminal, and includes following steps S110 and S120.

In step S110, receiving a low-power wake-up signal sent by a network device.

In some implementations, the terminal may receive at least one low-power wake-up signal sent by the network device, and it is learned from the foregoing descriptions that the terminal may receive, by using a main radio, the at least one low-power wake-up signal issued by the network device. The low-power wake-up signal may be used for changing a sleep state of the main radio in the terminal.

In step S120, determining a generation sequence of the low-power wake-up signal.

In some implementations, the low-power wake-up signal is obtained by the network device based on the generation sequence. For example, the terminal may determine the generation sequence based on the low-power wake-up signal, or may determine the generation sequence based on a low-power synchronization signal, or may determine the generation sequence based on sequence indication information sent by the network device. Details of determining the generation sequence of the low-power wake-up signal is not explicitly limited herein, and may be selected according to an actual situation.

As an example, the generation sequence of the low-power wake-up signal may be:

$$\frac{\{1+j,\ -1+j,\ -1+j,\ 1+j,\ -1+j,\ 1+j,\ 0,\ 1+j,\ 1+j,\ 1-j,\ 1+j,\ -1-j,\ -1+j\}}{\sqrt{2}}.$$

It may be understood that the determined generation sequence of the low-power wake-up signal may generate one low-power wake-up signal on a single channel, or may generate multiple low-power wake-up signals on multiple channels. In addition, the determined generation sequence of the low-power wake-up signal may be a set of sampling points corresponding to Fourier transform/inverse transform, or may be a set of subcarrier coefficients, or may be information carrying an amount of information carried by the low-power wake-up signal per time length unit.

By determining the generation sequence of the low-power wake-up signal, accumulated energy of the sequence can be obtained, and an energy threshold of a reference signal can be dynamically adjusted based on the accumulated energy, thereby improving accuracy of information determination.

The embodiments of the present disclosure provide that the terminal may receive the low-power wake-up signal sent by the network device, and may determine the generation sequence of the low-power wake-up signal, and then may flexibly adjust the energy threshold by determining the generation sequence corresponding to the low-power wake-up signal.

FIG. 3 is a flowchart of a signal sequence determination method according to some other embodiments. As shown in FIG. 3, the signal sequence determination method may be performed by a terminal, and includes following steps S210 and S220.

In step S210, acquiring a configuration resource of a low-power wake-up signal sent by a network device.

In an embodiment of the present disclosure, after receiving each low-power wake-up signal, the terminal may obtain a configuration resource of each low-power wake-up signal. On this basis, the generation sequence of the low-power wake-up signal is determined according to the configuration resource of the low-power wake-up signal.

Herein, the configuration resource of the low-power wake-up signal may include a time-domain resource, a frequency-domain resource, or a time-frequency resource. The time-domain resource may include a time-domain symbol, a slot, a radio frame, a radio subframe, a mini-slot, etc.; the frequency-domain resource may include an RB (Resource Block), an RE (Resource Element), an RBG (Resource Block Group), a BWP (Bandwidth Part), etc.; and the time-frequency resource may be a time-domain resource of any unit and a frequency-domain resource of any unit. For example, the time-frequency resource may be a previous time-domain symbol of the time-domain resource and a previous RB of the frequency-domain resource.

In step S220, determining a generation sequence of the low-power wake-up signal according to the configuration resource of the low-power wake-up signal.

In some implementations, the terminal may determine the generation sequence of the low-power wake-up signal based on the configuration resource of the low-power wake-up signal. There may be a specific correspondence between the configuration resource of the low-power wake-up signal and the generation sequence of the low-power wake-up signal, and after acquiring the configuration resource of the low-power wake-up signal, the terminal may determine the generation sequence of the low-power wake-up signal corresponding to the configuration resource.

In a specific implementation, the terminal may acquire a time-domain resource of the low-power wake-up signal sent by the network device, and on this basis, obtain the generation sequence of the low-power wake-up signal corresponding to the time-domain resource. Herein, the time-domain resource of the at least one low-power wake-up signal may correspond to one generation sequence. For example, when the time-domain resource of the low-power wake-up signal includes two symbols, the corresponding generation sequence of the low-power wake-up signal is a first generation sequence. For another example, when the time-domain resource of the low-power wake-up signal includes five symbols, the corresponding generation sequence of the low-power wake-up signal is a second generation sequence.

In another specific implementation, the terminal may acquire a frequency-domain resource of the low-power wake-up signal sent by the terminal device, and on this basis, obtain the generation sequence of the low-power wake-up signal corresponding to the frequency-domain resource. Herein, the frequency-domain resource of the at least one low-power wake-up signal may correspond to one generation sequence. For example, when the frequency-domain resource of the low-power wake-up signal includes two PRBs, the corresponding generation sequence of the low-power wake-up signal is a first generation sequence. For another example, when the frequency-domain resource of the low-power wake-up signal includes four PRBs, the corresponding generation sequence of the low-power wake-up signal is a second generation sequence.

In another specific implementation, the terminal may acquire a time-domain resource and a frequency-domain resource of the low-power wake-up signal that are sent by the terminal device, and on this basis, obtain the corresponding generation sequence of the low-power wake-up signal according to both the time-domain resource and the frequency-domain resource. Herein, the time-domain resource and the frequency-domain resource of the at least one low-power wake-up signal may correspond to one generation sequence. For example, when the time-domain resource of the low-power wake-up signal includes two symbols and the frequency-domain resource includes two PRBs, the corresponding generation sequence of the low-power wake-up signal is a first generation sequence.

It should be noted that, when the generation sequence corresponding to the low-power wake-up signal is acquired according to both the time-domain resource and the frequency-domain resource of the low-power wake-up signal, the terminal may first calculate a product of the time-domain resource and the frequency-domain resource of the low-power wake-up signal. On this basis, the corresponding generation sequence is obtained based on a calculation result. For example, when a number of symbols of the time-domain resource of the low-power wake-up signal * a number of PRBs of the frequency-domain resource is greater than a first value, it is determined that the generation sequence of the low-power wake-up signal is a first generation sequence. For example, when a number of symbols of the time-domain resource of the low-power wake-up signal * a number of PRBs of the frequency-domain resource is greater than a second value, it is determined that the generation sequence of the low-power wake-up signal is a second generation sequence.

In an embodiment of the present disclosure, the configuration resource of the low-power wake-up signal may be indicated by higher layer signaling or dynamic signaling. For example, the configuration resource of the low-power wake-up signal may be carried in signaling such as higher layer signaling RRC (Radio Resource Control), dynamic signaling DCI (Downlink Control Information), and a MAC CE (Medium Access Control Control Element).

Based on the above, in an embodiment of the present disclosure, N generation sequences may be pre-defined, and different time-domain resources/frequency-domain resources/time-frequency resources of the low-power wake-up signal may correspond to different generation sequences, that is, at least one time-domain resource/frequency-domain resource/time-frequency resource of the low-power wake-up signal may correspond to one generation sequence. For example, two generation sequences are predefined, a first resource and a second resource of the low-power wake-up signal correspond to a first generation sequence, and a third resource of the low-power wake-up signal corresponds to a second generation sequence. The first resource, the second resource, and the third resource of the low-power wake-up signal may be time-domain resources, frequency-domain resources, or time-frequency resources.

It should be noted that for various embodiments or features separated by "or", even if some of the features are not applicable, other solutions are not affected. In addition, on a non-conflict basis, the embodiments of the present disclosure may be combined with other embodiments or implementations involved in the method for determining a signal sequence for a terminal and various optional solutions thereof, which will not be repeated here.

The embodiments of the present disclosure provide that the terminal may receive the low-power wake-up signal sent by the network device, and may acquire the configuration resource of the low-power wake-up signal, and on this basis, determine the generation sequence of the low-power wake-up signal by using the configuration resource of the low-power wake-up signal, so that the generation sequence can be accurately and effectively obtained.

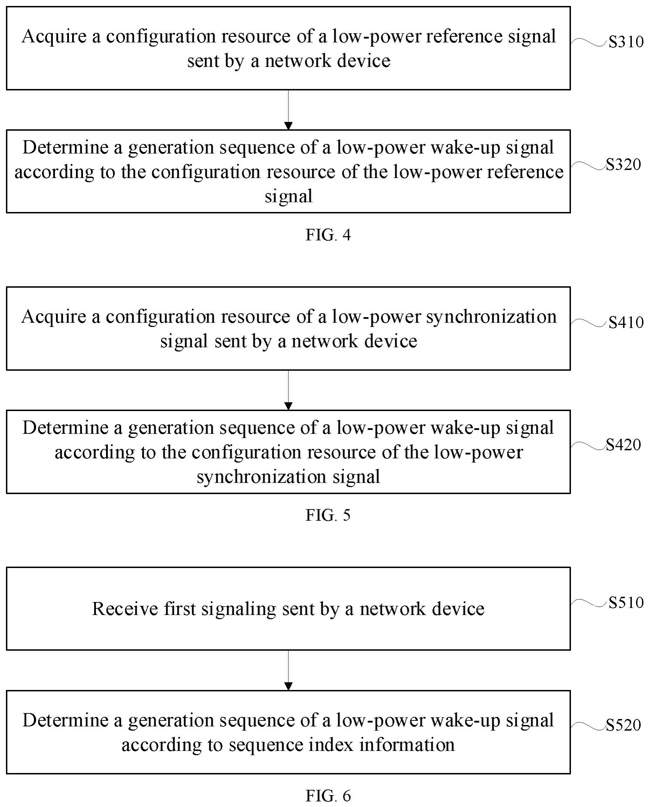

FIG. 4 is a flowchart of a signal sequence determination method according to some other embodiments. As shown in FIG. 4, the signal sequence determination method may be performed by a terminal, and includes following steps S310 and S320.

In step S310, acquiring a configuration resource of a low-power reference signal sent by a network device.

In an embodiment of the present disclosure, before receiving the at least one low-power wake-up signal, the terminal may receive at least one low-power reference signal, and then the terminal may acquire a configuration resource of each low-power reference signal. On this basis, the generation sequence of the low-power wake-up signal is determined according to the configuration resource of the low-power reference signal.

Herein, the configuration resource of the low-power reference signal may be a time-domain resource, a frequency-domain resource, or a time-domain resource and a frequency-domain resource. The time-domain resource may include a time-domain symbol, a slot, a radio frame, a radio subframe, a mini-slot, etc.; the frequency-domain resource may include an RB, an RE, an RBG, a BWP, etc.; and the time-frequency resource may be a time-domain resource of any unit and a frequency-domain resource of any unit. For example, the time-frequency resource may be a previous time-domain symbol of the time-domain resource and a previous RB of the frequency-domain resource.

In step S320, determining a generation sequence of a low-power wake-up signal according to the configuration resource of the low-power reference signal.

In some implementations, the terminal may determine the generation sequence of the low-power wake-up signal based on the configuration resource of the low-power reference signal. There may be a specific correspondence between the configuration resource of the low-power reference signal and the generation sequence of the low-power wake-up signal, and after acquiring the configuration resource of the low-power reference signal, the terminal may determine the generation sequence of the low-power wake-up signal corresponding to the configuration resource.

In a specific implementation, the terminal may acquire a time-domain resource of the low-power reference signal sent by the network device, and on this basis, obtain the generation sequence of the low-power wake-up signal corresponding to the time-domain resource. Herein, the time-domain resource of the at least one low-power reference signal may correspond to one generation sequence. For example, when the time-domain resource of the low-power reference signal includes two symbols, the corresponding generation sequence of the low-power wake-up signal is a first generation sequence. For another example, when the time-domain resource of the low-power reference signal includes five symbols, the corresponding generation sequence of the low-power wake-up signal is a second generation sequence.

In another specific implementation, the terminal may acquire a frequency-domain resource of the low-power reference signal sent by the terminal device, and on this basis, obtain the generation sequence of the low-power wake-up signal corresponding to the frequency-domain resource. Herein, the frequency-domain resource of the at least one low-power reference signal may correspond to one generation sequence. For example, when the frequency-domain resource of the low-power reference signal includes two PRBs, the corresponding generation sequence of the low-power wake-up signal is a first generation sequence. For another example, when the frequency-domain resource of the low-power reference signal includes four PRBs, the corresponding generation sequence of the low-power wake-up signal is a second generation sequence.

In another specific implementation, the terminal may acquire a time-domain resource and a frequency-domain resource of the low-power reference signal that are sent by the terminal device, and on this basis, obtain the corresponding generation sequence of the low-power wake-up signal according to both the time-domain resource and the frequency-domain resource. Herein, the time-domain resource and the frequency-domain resource of the at least one low-power reference signal may correspond to one generation sequence. For example, when the time-domain resource of the low-power reference signal includes two symbols and the frequency-domain resource includes two PRBs, the corresponding generation sequence of the low-power wake-up signal is a first generation sequence.

It should be noted that, when the generation sequence corresponding to the low-power wake-up signal is acquired according to both the time-domain resource and the frequency-domain resource of the low-power reference signal, the terminal may first calculate a product of the time-domain resource and the frequency-domain resource of the low-power reference signal. On this basis, the corresponding generation sequence is obtained based on a calculation result. For example, when a number of symbols of the time-domain resource of the low-power reference signal * a number of PRBs of the frequency-domain resource is greater than a first value, it is determined that the generation sequence of the low-power wake-up signal is a first generation sequence. For example, when a number of symbols of the time-domain resource of the low-power reference signal * a number of PRBs of the frequency-domain resource is greater than a second value, it is determined that the generation sequence of the low-power wake-up signal is a second generation sequence.

In an embodiment of the present disclosure, the configuration resource of the low-power reference signal may be indicated by higher layer signaling or dynamic signaling. For example, the configuration resource of the low-power reference signal may be carried in signaling such as higher layer signaling RRC, dynamic signaling DCI, and a MAC CE.

Based on the above, in an embodiment of the present disclosure, N generation sequences may be pre-defined, and different time-domain resources/frequency-domain resources/time-frequency resources of the low-power reference signal may correspond to different generation sequences, that is, at least one time-domain resource/frequency-domain resource/time-frequency resource of the low-power reference signal may correspond to one generation sequence. For example, two generation sequences are predefined, and a first resource and a second resource of the low-power reference signal correspond to a first generation sequence, and a third resource of the low-power reference signal corresponds to a second generation sequence, where the first resource, the second resource, and the third resource of the low-power reference signal may be time-domain resources, frequency-domain resources, or time-frequency resources.

The embodiments of the present disclosure provide that the terminal may receive the low-power reference signal sent by the network device, and may acquire the configuration resource of the low-power reference signal, and on this basis, determine the generation sequence of the low-power wake-up signal by using the configuration resource of the low-power reference signal, so that the generation sequence can be rapidly and effectively obtained.

FIG. 5 is a flowchart of a signal sequence determination method according to some other embodiments. As shown in FIG. 5, the signal sequence determination method may be performed by a terminal, and includes following steps S410 and S420.

In step S410, acquiring a configuration resource of a low-power synchronization signal sent by a network device.

In an embodiment of the present disclosure, before receiving the at least one low-power wake-up signal, the terminal may receive at least one low-power synchronization signal, and then the terminal may acquire a configuration resource of each low-power synchronization signal. On this basis, the generation sequence of the low-power wake-up signal is determined according to the configuration resource of the low-power synchronization signal.

Herein, the configuration resource of the low-power synchronization signal may be a time-domain resource, a frequency-domain resource, or a time-domain resource and a frequency-domain resource. The time-domain resource may include a time-domain symbol, a slot, a radio frame, a radio subframe, a mini-slot, etc.; the frequency-domain resource may include an RB, an RE, an RBG, a BWP, etc.; and the time-frequency resource may be a time-domain resource of any unit and a frequency-domain resource of any unit. For example, the time-frequency resource may be a previous time-domain symbol of the time-domain resource and a previous RB of the frequency-domain resource.

In step S420, determining a generation sequence of a low-power wake-up signal according to the configuration resource of the low-power synchronization signal.

In some implementations, the terminal may determine the generation sequence of the low-power wake-up signal based on the configuration resource of the low-power synchronization signal. There may be a specific correspondence between the configuration resource of the low-power synchronization signal and the generation sequence of the low-power wake-up signal, and after acquiring the configuration resource of the low-power synchronization signal, the terminal may determine the generation sequence of the low-power wake-up signal corresponding to the configuration resource.

In a specific implementation, the terminal may acquire a time-domain resource of the low-power synchronization signal sent by the network device, and on this basis, obtain the generation sequence of the low-power wake-up signal corresponding to the time-domain resource. Herein, the time-domain resource of the at least one low-power synchronization signal may correspond to one generation sequence. For example, when the time-domain resource of the low-power synchronization signal includes two symbols, the corresponding generation sequence of the low-power wake-up signal is a first generation sequence. For another example, when the time-domain resource of the low-power synchronization signal includes five symbols, the corresponding generation sequence of the low-power wake-up signal is a second generation sequence.

In another specific implementation, the terminal may acquire a frequency-domain resource of the low-power synchronization signal sent by the terminal device, and on this basis, obtain the generation sequence of the low-power wake-up signal corresponding to the frequency-domain resource. Herein, the frequency-domain resource of the at least one low-power synchronization signal may correspond to one generation sequence. For example, when the frequency-domain resource of the low-power synchronization signal includes two PRBs, the corresponding generation sequence of the low-power wake-up signal is a first generation sequence. For another example, when the frequency-domain resource of the low-power synchronization signal includes four PRBs, the corresponding generation sequence of the low-power wake-up signal is a second generation sequence.

In another specific implementation, the terminal may acquire a time-domain resource and a frequency-domain resource of the low-power synchronization signal that are sent by the terminal device, and on this basis, obtain the corresponding generation sequence of the low-power wake-up signal according to both the time-domain resource and the frequency-domain resource. Herein, the time-domain resource and the frequency-domain resource of the at least one low-power synchronization signal may correspond to one generation sequence. For example, when the time-domain resource of the low-power synchronization signal includes two symbols and the frequency-domain resource includes two PRBs, the corresponding generation sequence of the low-power wake-up signal is a first generation sequence.

It should be noted that, when the generation sequence corresponding to the low-power wake-up signal is acquired according to both the time-domain resource and the frequency-domain resource of the low-power synchronization signal, the terminal may first calculate a product of the time-domain resource and the frequency-domain resource of the low-power synchronization signal. On this basis, the corresponding generation sequence is obtained based on a calculation result. For example, when a number of symbols of the time-domain resource of the low-power synchronization signal * a number of PRBs of the frequency-domain resource is greater than a first value, it is determined that the generation sequence of the low-power wake-up signal is a first generation sequence. For example, when a number of symbols of the time-domain resource of the low-power synchronization signal * a number of PRBs of the frequency-domain resource is greater than a second value, it is determined that the generation sequence of the low-power wake-up signal is a second generation sequence.

In an embodiment of the present disclosure, the configuration resource of the low-power synchronization signal may be indicated by higher layer signaling or dynamic signaling. For example, the configuration resource of the low-power synchronization signal may be carried in signaling such as higher layer signaling RRC, dynamic signaling DCI, and a MAC CE.

Based on the above, in an embodiment of the present disclosure, N generation sequences may be pre-defined, and different time-domain resources/frequency-domain resources/time-frequency resources of the low-power synchronization signal may correspond to different generation sequences, that is, at least one time-domain resource/frequency-domain resource/time-frequency resource of the low-power synchronization signal may correspond to one generation sequence. For example, two generation sequences are predefined, and a first resource and a second resource of the low-power synchronization signal correspond to a first generation sequence, and a third resource of the low-power synchronization signal corresponds to a second generation sequence, where the first resource, the second resource, and the third resource of the low-power synchronization signal may be time-domain resources, frequency-domain resources, or time-frequency resources.

It should be noted that for various embodiments or features separated by "or", even if some of the features are not applicable, other solutions are not affected. In addition, on a non-conflict basis, the embodiments of the present disclosure may be combined with other embodiments or implementations involved in the method for determining a signal sequence for a terminal and various optional solutions thereof, which will not be repeated here.

The embodiments of the present disclosure provide that the terminal may receive the low-power synchronization signal sent by the network device, and may acquire the configuration resource of the low-power synchronization signal, and on this basis, determine the generation sequence of the low-power wake-up signal by using the configuration resource of the low-power synchronization signal, so that the generation sequence can be rapidly and effectively obtained.

FIG. 6 is a flowchart of a signal sequence determination method according to some other embodiments. As shown in FIG. 6, the signal sequence determination method may be performed by a terminal, and includes following steps S510 and S520.

In step S510, receiving first signaling sent by a network device.

In some implementations, the terminal may receive first signaling sent by the network device, where the first signaling may carry sequence index information. In addition, the first signaling may be carried by signaling such as higher layer signaling RRC, dynamic signaling DCI, and MAC CE.

In an embodiment of the present disclosure, the first signaling may be sent to the terminal together with the low-power wake-up signal, or may be sent to the terminal before sending the low-power wake-up signal, or may be sent after sending the low-power wake-up signal. A sequence of sending the first signaling and the low-power wake-up signal is not explicitly limited herein, and may be selected according to an actual situation.

In step S520, determining a generation sequence of a low-power wake-up signal according to sequence index information.

In an optional manner, the terminal may predefine N generation sequences, and after receiving the first signaling sent by the network device, the terminal may determine the generation sequence of the low-power wake-up signal based on the sequence index information carried in the first signaling. Herein, a sequence index indicated by the sequence index information may uniquely correspond to one generation sequence, that is, one sequence index may correspond to one generation sequence.

As an example, the sequence index information includes 2 bits, where 00 represents index 0, 01 represents index 1, 10 represents index 1, and 11 represents index 2. Different indexes correspond to different generation sequences of the low-power wake-up signal. For example, when the sequence index information is 01, the corresponding generation sequence of the low-power wake-up signal is a first generation sequence. For another example, when the sequence index information is 10, the corresponding generation sequence of the low-power wake-up signal is a second generation sequence.

It should be noted that for various embodiments or features separated by "or", even if some of the features are not applicable, other solutions are not affected. In addition, on a non-conflict basis, the embodiments of the present disclosure may be combined with other embodiments or implementations involved in the method for determining a signal sequence for a terminal and various optional solutions thereof, which will not be repeated here.

The embodiments of the present disclosure provide that the terminal may receive the first signaling sent by the network device, where the first signaling may carry the sequence index information, and on this basis, the generation sequence of the low-power wake-up signal is determined based on the sequence index information, so that the generation sequence can be accurately and effectively obtained.

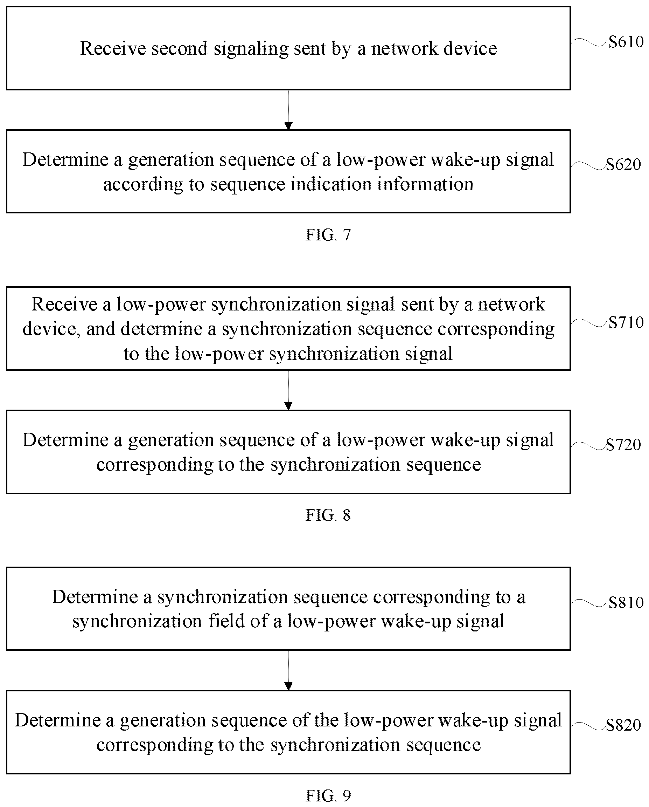

FIG. 7 is a flowchart of a signal sequence determination method according to some other embodiments. As shown in FIG. 7, the signal sequence determination method may be performed by a terminal, and includes following steps S610 and S620.

In step S610, receiving second signaling sent by a network device.

In some implementations, the terminal may receive second signaling sent by the network device, where the second signaling may carry sequence indication information. In addition, the second signaling may be carried by signaling such as higher layer signaling RRC, dynamic signaling DCI, and MAC CE.

In an embodiment of the present disclosure, the second signaling may be sent to the terminal together with the low-power wake-up signal, or may be sent to the terminal before sending the low-power wake-up signal, or may be sent after sending the low-power wake-up signal. A sequence of sending the second signaling and the low-power wake-up signal is not explicitly limited herein, and may be selected according to an actual situation.

In step S620, determining a generation sequence of a low-power wake-up signal according to sequence indication information.

In an optional manner, the terminal may predefine N generation sequences, and after receiving the second signaling sent by the network device, the terminal may determine the generation sequence of the low-power wake-up signal based on the sequence indication information carried in the second signaling, that is, the sequence indication information indicates the generation sequence of the low-power wake-up signal. Specifically, the sequence indication information may include n bits, and each bit, from high to low, may corresponds to a different generation sequence.

In an example, the sequence indication information includes four bits, and a first bit, a second bit, a third bit and a fourth bit, from high to low, may correspond to different generation sequences. For example, when the sequence indication information is 1000, it indicates that the generation sequence of the low-power wake-up signal is a first generation sequence. For another example, when the sequence indication information is 0100, it indicates that the generation sequence of the low-power wake-up signal is a second generation sequence.

It should be noted that for various embodiments or features separated by "or", even if some of the features are not applicable, other solutions are not affected. In addition, on a non-conflict basis, the embodiments of the present disclosure may be combined with other embodiments or implementations involved in the method for determining a signal sequence for a terminal and various optional solutions thereof, which will not be repeated here.

The embodiments of the present disclosure provide that the terminal may receive the second signaling sent by the network device, where the second signaling may carry the sequence indication information, and on this basis, the generation sequence of the low-power wake-up signal is determined based on the sequence indication information, so that the generation sequence can be accurately and effectively obtained.

FIG. 8 is a flowchart of a signal sequence determination method according to some other embodiments. As shown in FIG. 8, the signal sequence determination method may be performed by a terminal, and includes following steps S710 and S720.

In step S710, receiving a low-power synchronization signal sent by a network device, and determining a synchronization sequence corresponding to the low-power synchronization signal.

In an embodiment of the present disclosure, the terminal may receive at least one low-power synchronization signal sent by the network device, and may determine a synchronization sequence corresponding to each low-power synchronization signal. The low-power synchronization signal may be generated based on the synchronization sequence. Herein, the terminal may determine the synchronization sequence corresponding to the synchronization signal in a manner of blind detection.

In step S720, determining a generation sequence of a low-power wake-up signal corresponding to the synchronization sequence.

In an embodiment of the present disclosure, N generation sequences are predefined, and different synchronization sequences are predefined, and after the synchronization sequence corresponding to the low-power synchronization signal is determined, the terminal may acquire the generation sequence of the low-power wake-up signal corresponding to the synchronization sequence. At least one synchronization sequence may correspond to one generation sequence. For example, the generation sequence of the low-power wake-up signal corresponding to a first synchronization sequence and a second synchronization sequence is a first generation sequence. For another example, the generation sequence of the low-power wake-up signal corresponding to a third synchronization sequence is a second generation sequence.

It should be noted that for various embodiments or features separated by "or", even if some of the features are not applicable, other solutions are not affected. In addition, on a non-conflict basis, the embodiments of the present disclosure may be combined with other embodiments or implementations involved in the method for determining a signal sequence for a terminal and various optional solutions thereof, which will not be repeated here.

The embodiments of the present disclosure provide that the terminal can receive the low-power synchronization signal sent by the network device, and can determine the synchronization sequence corresponding to the low-power synchronization signal, and on this basis, determine the generation sequence corresponding to the low-power wake-up signal according to the synchronization sequence, so that the generation sequence can be quickly and effectively acquired.

FIG. 9 is a flowchart of a signal sequence determination method according to some other embodiments. As shown in FIG. 9, the signal sequence determination method may be performed by a terminal, and includes following steps S810 and S820.

In step S810, determining a synchronization sequence corresponding to a synchronization field of a low-power wake-up signal.

In an embodiment of the present disclosure, the low-power wake-up signal may include a synchronization field and a data field, so the terminal may determine the generation sequence of the low-power wake-up signal according to the synchronization field in the low-power wake-up signal. Specifically, the terminal may first determine a synchronization sequence corresponding to the synchronization field in the low-power wake-up signal. The synchronization field in the low-power wake-up signal may be generated based on the synchronization sequence. Herein, the terminal may determine, in a manner of blind detection, the synchronization sequence corresponding to the synchronization field in the low-power wake-up signal.

In step S820, determining a generation sequence of the low-power wake-up signal corresponding to the synchronization sequence.

In an embodiment of the present disclosure, N generation sequences are predefined, and different synchronization sequences are predefined, and after the synchronization sequence corresponding to the low-power synchronization signal is determined, the terminal may acquire the generation sequence of the low-power wake-up signal corresponding to the synchronization sequence. At least one synchronization sequence may correspond to one generation sequence. For example, the generation sequence of the low-power wake-up signal corresponding to a first synchronization sequence and a second synchronization sequence is a first generation sequence. For another example, the generation sequence of the low-power wake-up signal corresponding to a third synchronization sequence is a second generation sequence.

It should be noted that for various embodiments or features separated by "or", even if some of the features are not applicable, other solutions are not affected. In addition, on a non-conflict basis, the embodiments of the present disclosure may be combined with other embodiments or implementations involved in the method for determining a signal sequence for a terminal and various optional solutions thereof, which will not be repeated here.

The embodiments of the present disclosure provide that the terminal can determine the synchronization sequence corresponding to the synchronization field in the low-power wake-up signal, and on this basis, determine the generation sequence corresponding to the low-power wake-up signal according to the synchronization sequence, so that the generation sequence can be quickly and effectively acquired.

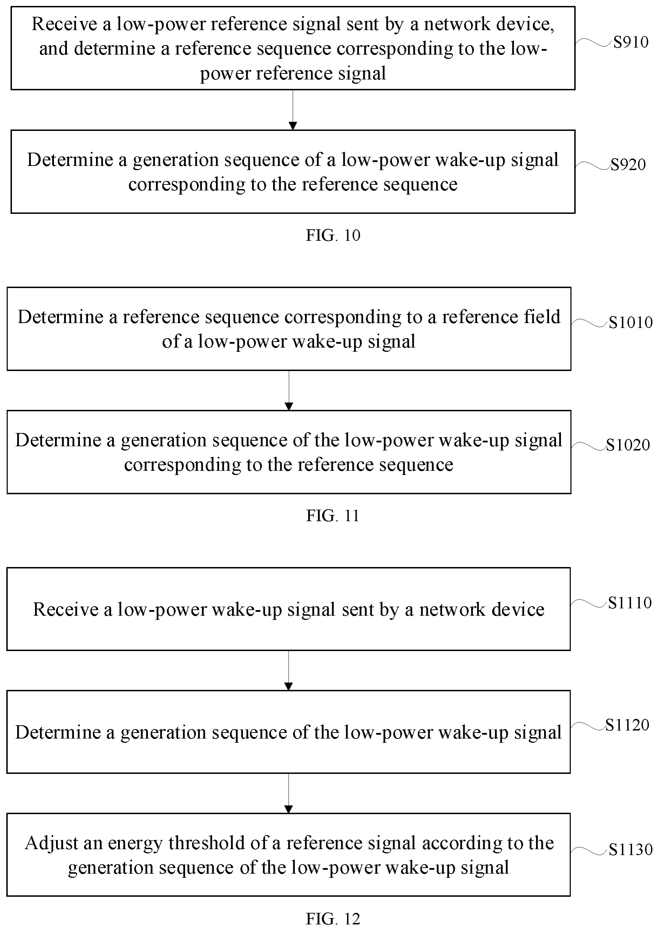

FIG. 10 is a flowchart of a signal sequence determination method according to some other embodiments. As shown in FIG. 10, the signal sequence determination method may be performed by a terminal, and includes following steps S910 and S920.

In step S910, receiving a low-power reference signal sent by a network device, and determining a reference sequence corresponding to the low-power reference signal.

In an embodiment of the present disclosure, the terminal may receive at least one low-power reference signal sent by the network device, and may determine a reference sequence corresponding to each low-power reference signal. The low-power reference signal may be generated based on the reference sequence. Herein, the terminal may determine the reference sequence corresponding to the reference signal in a manner of blind detection.

In step S920, determining a generation sequence of a low-power wake-up signal corresponding to the reference sequence.

In an embodiment of the present disclosure, N generation sequences are predefined, and different reference sequences are predefined, and after the reference sequence corresponding to the low-power reference signal is determined, the terminal may acquire the generation sequence of the low-power wake-up signal corresponding to the reference sequence. At least one reference sequence may correspond to one generation sequence. For example, the generation sequence of the low-power wake-up signal corresponding to a first reference sequence and a second reference sequence is a first generation sequence. For another example, the generation sequence of the low-power wake-up signal corresponding to a third reference sequence is a second generation sequence.

It should be noted that for various embodiments or features separated by "or", even if some of the features are not applicable, other solutions are not affected. In addition, on a non-conflict basis, the embodiments of the present disclosure may be combined with other embodiments or implementations involved in the method for determining a signal sequence for a terminal and various optional solutions thereof, which will not be repeated here.

The embodiments of the present disclosure provide that the terminal can receive the low-power reference signal sent by the network device, and can determine the reference sequence corresponding to the low-power reference signal, and on this basis, determine the generation sequence corresponding to the low-power wake-up signal according to the reference sequence, so that the generation sequence can be quickly and effectively acquired.

FIG. 11 is a flowchart of a signal sequence determination method according to some other embodiments. As shown in FIG. 11, the signal sequence determination method may be performed by a terminal, and includes following steps S1010 and S1020.

In step S1010, determining a reference sequence corresponding to a reference field of a low-power wake-up signal.

In an embodiment of the present disclosure, the low-power wake-up signal may include a reference field and a data field, so the terminal may determine the generation sequence of the low-power wake-up signal according to the reference field in the low-power wake-up signal. Specifically, the terminal may first determine a reference sequence corresponding to the reference field in the low-power wake-up signal. The reference field in the low-power wake-up signal may be generated based on the reference sequence. Herein, the terminal may determine, in a manner of blind detection, the reference sequence corresponding to the reference field in the low-power wake-up signal.

In step S1020, determining a generation sequence of the low-power wake-up signal corresponding to the reference sequence.

In an embodiment of the present disclosure, N generation sequences are predefined, and different reference sequences are predefined, and after the reference sequence corresponding to the low-power reference signal is determined, the terminal may acquire the generation sequence of the low-power wake-up signal corresponding to the reference sequence. At least one reference sequence may correspond to one generation sequence. For example, the generation sequence of the low-power wake-up signal corresponding to a first reference sequence and a second reference sequence is a first generation sequence. For another example, the generation sequence of the low-power wake-up signal corresponding to a third reference sequence is a second generation sequence.

It should be noted that for various embodiments or features separated by "or", even if some of the features are not applicable, other solutions are not affected. In addition, on a non-conflict basis, the embodiments of the present disclosure may be combined with other embodiments or implementations involved in the method for determining a signal sequence for a terminal and various optional solutions thereof, which will not be repeated here.

The embodiments of the present disclosure provide that the terminal may determine the reference sequence corresponding to the reference field in the low-power wake-up signal, and on this basis, determine the generation sequence corresponding to the low-power wake-up signal according to the reference sequence, so that the generation sequence can be quickly and effectively obtained.

FIG. 12 is a flowchart of a signal sequence determination method according to some other embodiments. As shown in FIG. 12, the signal sequence determination method may be performed by a terminal, and includes following steps S1110-S1130.

In step S1110, receiving a low-power wake-up signal sent by a network device.

In step S1120, determining a generation sequence of the low-power wake-up signal.

Specific implementations of steps S1110 to S1120 have been described in detail in the foregoing embodiments, which will not be repeated herein.

In step S1130, adjusting an energy threshold of a reference signal according to the generation sequence of the low-power wake-up signal.

In some implementations, after determining the generation sequence of the low-power wake-up signal, the terminal may adjust the threshold of the reference signal based on the generation sequence of the low-power wake-up signal. In other words, the terminal may adjust a determination threshold of the reference signal based on the generation sequence of the low-power wake-up signal. Based on this, the adjusted energy threshold is used to determine to-be-sent information.

In an example, a determined generation sequence of the low-power wake-up signal is 17, and a valid value thereof is 16. Thus, a maximum energy value accumulated in a time-domain symbol can be 16, that is, the energy threshold is adjusted to 16. On this basis, the terminal may determine a to-be-sent symbol based on the adjusted energy threshold 16, and if the energy of the to-be-sent symbol is greater than the adjusted energy threshold 16, determine that the to-be-sent symbol is an "on" symbol, which represents information A; otherwise, determine that the to-be-sent symbol is an "off" symbol, which represents information B.

It should be noted that for various embodiments or features separated by "or", even if some of the features are not applicable, other solutions are not affected. In addition, on a non-conflict basis, the embodiments of the present disclosure may be combined with other embodiments or implementations involved in the method for determining a signal sequence for a terminal and various optional solutions thereof, which will not be repeated here.

The embodiments of the present disclosure provide that the terminal can receive the low-power reference signal sent by the network device, and can determine the reference sequence corresponding to the low-power reference signal, and on this basis, determine the generation sequence corresponding to the low-power wake-up signal according to the reference sequence, so that the generation sequence can be quickly and effectively acquired.

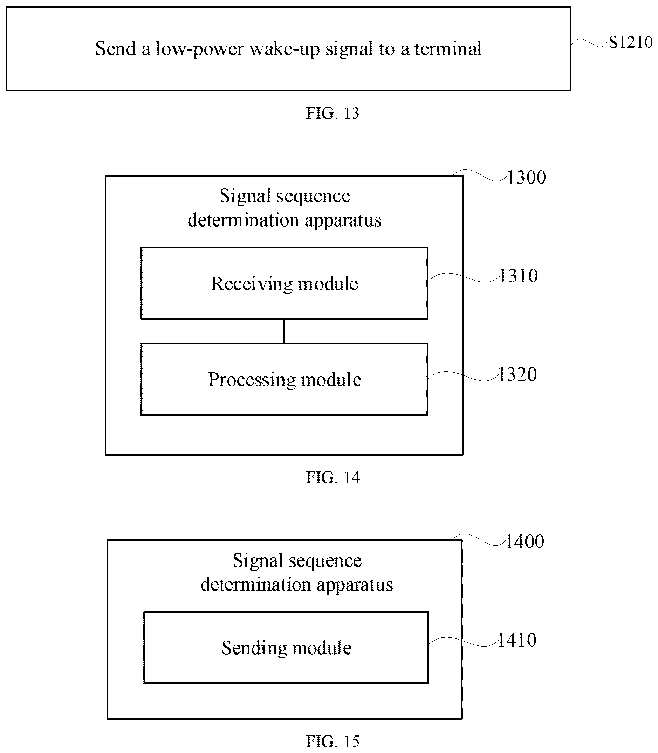

FIG. 13 is a flowchart of a signal sequence determination method according to some embodiments. As shown in FIG. 13, the signal sequence determination method may be performed by a network device, and includes a following step S1210.

In step S1210, sending a low-power wake-up signal to a terminal.

In an embodiment of the present disclosure, the low-power wake-up signal is used by the terminal to determine a generation sequence of the low-power wake-up signal, that is, after sending the low-power wake-up signal to the terminal, the network device may instruct the terminal to acquire the generation sequence corresponding to the low-power wake-up signal.

In some implementations, the network device may send a configuration resource of the low-power wake-up signal to the terminal, where at least one configuration resource of the low-power wake-up signal may correspond to one generation sequence.

In some other implementations, the network device may send a configuration resource of the low-power reference signal to the terminal, where at least one configuration resource of the low-power reference signal may correspond to one generation sequence.

In some other implementations, the network device may send a configuration resource of the low-power synchronization signal to the terminal, where at least one configuration resource of the low-power synchronization signal may correspond to one generation sequence.

Additionally, the configuration resource includes at least one of: a time-domain resource, a frequency-domain resource, and a time-frequency resource.

In some other implementations, the network device may send first signaling to the terminal, where the first signaling may carry sequence index information. Herein, a sequence index indicated by the sequence index information may uniquely correspond to one generation sequence.

In some other implementations, the network device may send second signaling to the terminal, where the second signaling may carry sequence indication information.

In some other implementations, the network device may send a low-power synchronization signal to the terminal, where the low-power synchronization signal may be used to determine the generation sequence.

In some other implementations, the network device may send a low-power reference signal to the terminal, where the low-power reference signal may be used to determine the generation sequence.

It should be noted that for various embodiments or features separated by "or", even if some of the features are not applicable, other solutions are not affected. In addition, on a non-conflict basis, the embodiments of the present disclosure may be combined with other embodiments or implementations involved in the method for determining a signal sequence for a terminal and various optional solutions thereof, which will not be repeated here.

In an embodiment of the present disclosure, the network device may send the low-power wake-up signal to the terminal, where the low-power wake-up signal is used by the terminal to determine the generation sequence of the low-power wake-up signal, and the energy threshold can be flexibly adjusted by determining the generation sequence corresponding to the low-power wake-up signal.

FIG. 14 is a block diagram of a signal sequence determination apparatus 1300 according to some embodiments. Referring to FIG. 14, the signal sequence determination apparatus 1300 is applied to a terminal, and the signal sequence determination apparatus 1300 may include a receiving module 1310 and a processing module 1320.

The receiving module 1310 is configured to receive a low-power wake-up signal sent by a network device.

The processing module 1320 is configured to determine a generation sequence of the low-power wake-up signal.

In some implementations, the processing module 1320 is further configured to: acquire a configuration resource of the low-power wake-up signal sent by the network device; and determine the generation sequence of the low-power wake-up signal according to the configuration resource of the low-power wake-up signal, where at least one configuration resource of the low-power wake-up signal corresponds to one generation sequence.

In some implementations, the processing module 1320 is further configured to: acquire a configuration resource of a low-power reference signal sent by the network device; and determine the generation sequence of the low-power wake-up signal according to the configuration resource of the low-power reference signal, where at least one configuration resource of the low-power reference signal corresponds to one generation sequence.

In some implementations, the processing module 1320 is further configured to: acquire a configuration resource of a low-power synchronization signal sent by the network device; and determine the generation sequence of the low-power wake-up signal according to the configuration resource of the low-power synchronization signal, where at least one configuration resource of the low-power synchronization signal corresponds to one generation sequence.

In some implementations, the configuration resource includes any one of:

a time-domain resource;
a frequency-domain resource; and
a time-frequency resource.

In some implementations, the processing module 1320 is further configured to: receive first signaling sent by the network device, where the first signaling carries sequence index information; and determine the generation sequence of the low-power wake-up signal according to the sequence index information, where a sequence index indicated by the sequence index information uniquely corresponds to one generation sequence.

In some implementations, the processing module 1320 is further configured to: receive second signaling sent by the network device, where the second signaling carries sequence indication information; and determine the generation sequence of the low-power wake-up signal according to the sequence indication information.

In some implementations, the processing module 1320 is further configured to receive a low-power synchronization signal sent by the network device, determine a synchronization sequence corresponding to the low-power synchronization signal, and determine the generation sequence of the low-power wake-up signal corresponding to the synchronization sequence.

In some implementations, the processing module 1320 is further configured to determine the synchronization sequence corresponding to a synchronization field of the low-power wake-up signal; and determine the generation sequence of the low-power wake-up signal corresponding to the synchronization sequence.

In some implementations, the processing module 1320 is further configured to receive a low-power reference signal sent by the network device, determine a reference sequence corresponding to the low-power reference signal, and determine the generation sequence of the low-power wake-up signal corresponding to the reference sequence.

In some implementations, the processing module 1320 is further configured to: determine the reference sequence corresponding to a reference field of the low-power wake-up signal; and determine the generation sequence of the low-power wake-up signal corresponding to the reference sequence.

In some implementations, the processing module 1320 is further configured to adjust an energy threshold of a reference signal according to the generation sequence of the low-power wake-up signal.

The embodiments of the present disclosure provide that the terminal may receive the low-power wake-up signal sent by the network device, and may determine the generation sequence of the low-power wake-up signal, and then may flexibly adjust the energy threshold by determining the generation sequence corresponding to the low-power wake-up signal.

FIG. 15 is a block diagram of a signal sequence determination apparatus 1400 according to some embodiments. Referring to FIG. 15, the signal sequence determination apparatus 1400 is applied to a network device, and the signal sequence determination apparatus 1400 may include a sending module 1410.

The sending module 1410 is configured to send a low-power wake-up signal to a terminal, where the low-power wake-up signal is used by the terminal to determine a generation sequence of the low-power wake-up signal.

In some implementations, the sending module 1410 is further configured to send a configuration resource of the low-power wake-up signal to the terminal, where at least one configuration resource of the low-power wake-up signal corresponds to one generation sequence.

In some implementations, the sending module 1410 is further configured to send a configuration resource of a low-power reference signal to the terminal, where at least one configuration resource of the low-power reference signal corresponds to one generation sequence.

In some implementations, the sending module 1410 is further configured to send a configuration resource of a low-power synchronization signal to the terminal, where at least one configuration resource of the low-power synchronization signal corresponds to one generation sequence.

In some implementations, the configuration resource includes any one of:

a time-domain resource;
a frequency-domain resource; and
a time-frequency resource.

In some implementations, the sending module 1410 is further configured to send first signaling to the terminal, where the first signaling carries sequence index information, and a sequence index indicated by the sequence index information uniquely corresponds to one generation sequence.

In some implementations, the sending module 1410 is further configured to send second signaling to the terminal, where the second signaling carries sequence indication information.

In some implementations, the sending module 1410 is further configured to send a low-power synchronization signal to the terminal, where the low-power synchronization signal is used to determine the generation sequence.

In some implementations, the sending module 1410 is further configured to send a low-power reference signal to the terminal, where the low-power reference signal is used to determine the generation sequence.

In an embodiment of the present disclosure, the network device may send the low-power wake-up signal to the terminal, where the low-power wake-up signal is used by the terminal to determine the generation sequence of the low-power wake-up signal, and the energy threshold can be flexibly adjusted by determining the generation sequence corresponding to the low-power wake-up signal.

For the apparatus in the above embodiments, the specific manner in which each module performs operations has been described in detail in the embodiments of the related methods, and will not be repeated in detail here.

The present disclosure further provides a communication system, which may include a terminal and a network device, where the terminal is configured to perform operations related to the terminal, and the network device is configured to perform operations related to the network device.

The present disclosure further provides a computer-readable storage medium storing a computer program instruction thereon, where when the program instruction is executed by a processor, steps of the signal sequence determination method provided by the present disclosure is implemented.

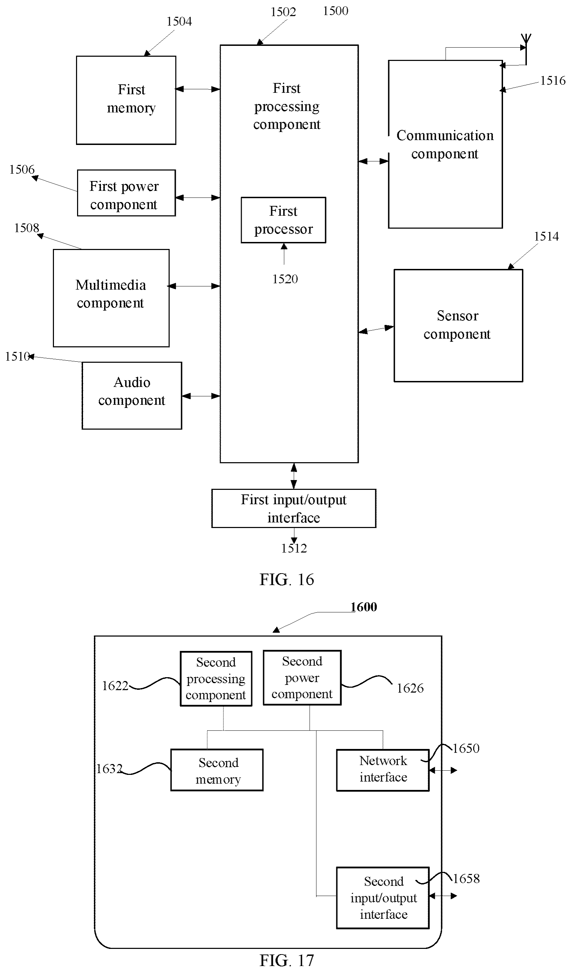

FIG. 16 is a block diagram of a terminal 1500 according to some embodiments. For example, the terminal 1500 may be a mobile phone, a computer, a digital broadcast terminal, a messaging device, a gaming console, a tablet device, a medical device, exercise equipment, a personal digital assistant, a smart vehicle, etc.

Referring to FIG. 16, the terminal 1500 may include one or more of: a first processing component 1502, a first memory 1504, a first power component 1506, a multimedia component 1508, an audio component 1510, a first input/output interface 1512, a sensor component 1514, and a communication component 1516.

The first processing component 1502 typically controls overall operations of the terminal 1500, such as the operations associated with display, telephone calls, data communications, camera operations, and recording operations. The first processing component 1502 may include one or more first processors 1520 to execute instructions to complete all or part of the steps of the signal sequence determination method described above. Moreover, the first processing component 1502 may include one or more modules which facilitate the interaction between the first processing component 1502 and other components. For example, the first processing component 1502 may include a multimedia module to facilitate the interaction between the multimedia component 1508 and the first processing component 1502.

The first memory 1504 is configured to store various types of data to support the operation of the terminal 1500. Examples of such data include instructions for any applications or methods operated on the terminal 1500, contact data, phonebook data, messages, pictures, video, etc. The first memory 1504 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The first power component 1506 provides power to various components of the terminal 1500. The first power component 1506 may include a power management system, one or more power sources, and any other components associated with the generation, management, and distribution of power in the terminal 1500.

The multimedia component 1508 includes a screen providing an output interface between the terminal 1500 and the user. In some embodiments, the screen may include a liquid crystal display (LCD) and a touch panel (TP). If the screen includes a touch panel, the screen may be implemented as a touch screen to receive input signals from a user. The touch panel includes one or more touch sensors to sense touches, swipes, and gestures on the touch panel. The touch sensor may not only sense a boundary of a touch or slide action, but also detect a duration and pressure associated with the touch or slide operation. In some embodiments, the multimedia component 1508 includes a front camera and/or a rear camera. The front camera and the rear camera may receive an external multimedia datum while the terminal 1500 is in an operation mode, such as a photographing mode or a video mode. Each of the front camera and the rear camera may be a fixed optical lens system or have focal length and optical zoom capability.

The audio component 1510 is configured to output and/or input audio signals. For example, the audio component 1510 includes a microphone (MIC) configured to receive an external audio signal when the terminal 1500 is in an operation mode, such as a call mode, a recording mode, and a voice recognition mode. The received audio signal may be further stored in the first memory 1504 or transmitted via the communication component 1516. In some embodiments, the audio component 1510 further includes a speaker to output audio signals.

The first input/output interface 1512 provides an interface between the first processing component 1502 and peripheral interface modules, such as a keyboard, a click wheel, buttons, and the like. These buttons may include, but are not limited to, home buttons, volume buttons, start buttons, and lock buttons.

The sensor component 1514 includes one or more sensors to provide status assessments of various aspects of the terminal 1500. For example, the sensor component 1514 may detect an open/closed status of the terminal 1500, relative positioning of components, e.g., the display and the keypad, of the terminal 1500, a change in position of the terminal 1500 or a component of the terminal 1500, a presence or absence of user contact with the terminal 1500, an orientation or an acceleration/deceleration of the terminal 1500, and a change in temperature of the terminal 1500. The sensor component 1514 may include a proximity sensor configured to detect the presence of nearby objects without requiring any physical contact. The sensor component 1514 may also include a light sensor, such as a CMOS or CCD image sensor, for use in imaging applications. In some embodiments, the sensor component 1514 may also include an accelerometer sensor, a gyroscope sensor, a magnetic sensor, a pressure sensor, or a temperature sensor.

The communication component 1516 is configured to facilitate communication, wired or wirelessly, between the terminal 1500 and other devices. The terminal 1500 can access a wireless network based on a communication standard, such as WiFi, 2G or 3G, or a combination thereof. In an example embodiment, the communication component 1516 receives a broadcast signal or broadcast associated information from an external broadcast management system via a broadcast channel. In an example embodiment, the communication component 1516 further includes a near field communication (NFC) module to facilitate short-range communication. For example, NFC modules may be implemented based on radio frequency identification (RFID) technology, infrared data association (IrDA) technology, ultra-wideband (UWB) technology, Bluetooth (BT) technology, and other technologies.

In an example embodiment, the terminal 1500 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above signal sequence determination method.

In an example embodiment, there is also provided a non-transitory computer-readable storage medium including an instruction, such as included in the first memory 1504, executable by the first processor 1520 in the terminal 1500, for performing the above-described signal sequence determination method. For example, the non-transitory computer-readable storage medium may be a ROM (read-only memory), a RAM (random access memory), CD-ROM (compact disc read-only memory), magnetic tape, floppy disk, optical data storage device, or the like.

The above apparatus may be, in addition to an independent electronic device, a part of the independent electronic device. For example, in an embodiment, the apparatus may be an integrated circuit (IC) or a chip, where the integrated circuit may be a single IC, or may be a set of ICs; and the chip may include but is not limited to the following types: a graphics processing unit (GPU), a central processing unit (CPU), a field programmable gate array (FPGA), a digital signal processor (DSP), an application specific integrated circuit (ASIC), a system on chip (SOC), or a system on chip (SoC). The integrated circuit or the chip may be configured to execute an executable instruction (or code), to implement the foregoing signal sequence determination method. The executable instructions may be stored in the integrated circuit or chip, or may be obtained from another apparatus or device, for example, the integrated circuit or chip includes a processor, a memory, and an interface configured to communicate with the another apparatus. The executable instruction may be stored in the memory, and when the executable instruction is executed by the processor, the foregoing signal sequence determination method is implemented; or the integrated circuit or chip may receive the executable instruction through the interface and transmit the executable instruction to the processor for execution, to implement the foregoing signal sequence determination method.

In another example embodiment, a computer program product is further provided, the computer program product including a computer program executable by a programmable apparatus, the computer program having code portions for performing the above signal sequence determination method when executed by the programmable apparatus.

FIG. 17 is a block diagram of a network device according to an example embodiment. For example, the network device 1600 may be provided as a server. Referring to FIG. 17, the network device 1600 includes a second processing component 1622, which further includes one or more processors, and memory resources represented by a second memory 1632 for storing instructions executable by the second processing component 1622, such as application programs. The application program stored in the second memory 1632 may include one or more modules each corresponding to a set of instructions. In addition, the second processing component 1622 is configured to execute instructions to perform the signal sequence determination method.

The network device 1600 may further include a second power component 1626 configured to perform power management of the network device 1600, a wired or wireless network interface 1650 configured to connect the network device 1600 to a network, and a second input/output interface 1658. The network device 1600 may operate based on an operating system stored in memory 1632, such as Windows Server™, Mac OS X™, Unix™, Linux™, FreeBSD™ or the like.

Other embodiments of the present disclosure will be apparent to those skilled in the art from consideration of the specification and practice of the present disclosure disclosed herein. The present disclosure is intended to cover any variations, uses, or adaptations of the present disclosure following the general principles thereof and including such departures from the present disclosure as come within known or customary practice in the art. It is intended that the specification and examples be considered as examples only, with a true scope and spirit of the disclosure being indicated by the following claims.

It should be understood that the present disclosure is not limited to the precise structures described above and shown in the accompanying drawings, and various modifications and changes may be made without departing from the scope thereof. The scope of the present disclosure is limited only by the appended claims.

**Claims**

1.    A signal sequence determination method, performed by a terminal, comprising:

receiving a low-power wake-up signal sent by a network device; and
determining a generation sequence of the low-power wake-up signal.

2. The method according to claim 1, wherein determining the generation sequence of the low-power wake-up signal comprises:

   acquiring a configuration resource of the low-power wake-up signal sent by the network device; and
   determining the generation sequence of the low-power wake-up signal according to the configuration resource of the low-power wake-up signal, wherein at least one configuration resource of the low-power wake-up signal corresponds to one generation sequence.

3. The method according to claim 1, wherein determining the generation sequence of the low-power wake-up signal comprises:

   acquiring a configuration resource of a low-power reference signal sent by the network device; and
   determining the generation sequence of the low-power wake-up signal according to the configuration resource of the low-power reference signal, wherein at least one configuration resource of the low-power reference signal corresponds to one generation sequence.

4. The method according to claim 1, wherein determining the generation sequence of the low-power wake-up signal comprises:

   acquiring a configuration resource of a low-power synchronization signal sent by the network device; and
   determining the generation sequence of the low-power wake-up signal according to the configuration resource of the low-power synchronization signal, wherein at least one configuration resource of the low-power synchronization signal corresponds to one generation sequence.

5. The method according to any one of claims 2-4, wherein the configuration resource comprises any one of:

   a time-domain resource;
   a frequency-domain resource; and
   a time-frequency resource.

6. The method according to claim 1, wherein determining the generation sequence of the low-power wake-up signal further comprises:

   receiving first signaling sent by the network device, wherein the first signaling carries sequence index information; and
   determining the generation sequence of the low-power wake-up signal according to the sequence index information, wherein a sequence index indicated by the sequence index information uniquely corresponds to one generation sequence.

7. The method according to claim 1, wherein determining the generation sequence of the low-power wake-up signal further comprises:

   receiving second signaling sent by the network device, wherein the second signaling carries sequence indication information; and
   determining the generation sequence of the low-power wake-up signal according to the sequence indication information.

8. The method according to claim 1, wherein determining the generation sequence of the low-power wake-up signal further comprises:

   receiving a low-power synchronization signal sent by the network device, and determining a synchronization sequence corresponding to the low-power synchronization signal; and
   determining the generation sequence of the low-power wake-up signal corresponding to the synchronization sequence.

9. The method according to claim 1, further comprising:

   determining a synchronization sequence corresponding to a synchronization field of the low-power wake-up signal; and
   determining the generation sequence of the low-power wake-up signal corresponding to the synchronization sequence.

10. The method according to claim 1, wherein determining the generation sequence of the low-power wake-up signal further comprises:

   receiving a low-power reference signal sent by the network device, and determining a reference sequence corresponding to the low-power reference signal; and
   determining the generation sequence of the low-power wake-up signal corresponding to the reference sequence.

11. The method according to claim 1, further comprising:

   determining a reference sequence corresponding to a reference field of the low-power wake-up signal; and
   determining the generation sequence of the low-power wake-up signal corresponding to the reference sequence.

12. The method according to claim 1, further comprising:
   adjusting an energy threshold of a reference signal according to the generation sequence of the low-power wake-up signal.

13. A signal sequence determination method, performed by a network device, comprising:
   sending a low-power wake-up signal to a terminal, wherein the low-power wake-up signal is used by the terminal to determine a generation sequence of the low-power wake-up signal.

14. The method according to claim 13, further comprising:
   sending a configuration resource of the low-power wake-up signal to the terminal, wherein at least one configuration resource of the low-power wake-up signal corresponds to one generation sequence.

15. The method according to claim 13, further comprising:
   sending a configuration resource of the low-power reference signal to the terminal, wherein at least one configuration resource of the low-power reference signal corresponds to one generation sequence.

16. The method according to claim 13, further comprising:
   sending a configuration resource of the low-power synchronization signal to the terminal, wherein at least one configuration resource of the low-power synchronization signal corresponds to one generation sequence.

17. The method according to any one of claims 14-16, wherein the configuration resource comprises any one of:

   a time-domain resource;
   a frequency-domain resource; and
   a time-frequency resource.

18. The method according to claim 13, further comprising:
   sending first signaling to the terminal, wherein the first signaling carries sequence index information, and a sequence index indicated by the sequence index information uniquely corresponds to one generation sequence.

19. The method according to claim 13, further comprising:
   sending second signaling to the terminal, wherein the second signaling carries sequence indication information.

20. The method according to claim 13, further comprising:
   sending a low-power synchronization signal to the terminal, wherein the low-power synchronization signal is used to determine the generation sequence.

21. The method according to claim 13, further comprising:
   sending a low-power reference signal to the terminal, wherein the low-power reference signal is used to determine the generation sequence.

22. A signal sequence determination apparatus, comprising:

a receiving module, configured to receive a low-power wake-up signal sent by a network device; and
a processing module, configured to determine a generation sequence of the low-power wake-up signal.

23. A signal sequence determination apparatus, comprising:
a sending module, configured to send a low-power wake-up signal to a terminal, wherein the low-power wake-up signal is used by the terminal to determine a generation sequence of the low-power wake-up signal.

24. A terminal, comprising:

one or more first processor; and
a first memory for storing a first-processor-executable instruction;
wherein the one or more first processor is configured to execute the executable instruction to implement the method according to any one of claims 1-12.

25. A network device, comprising:

one or more second processor; and
a second memory for storing a second-processor-executable instruction;
wherein the one or more second processor is configured to execute the executable instruction to implement the method according to any one of claims 13-21.

26. A communication system, comprising the terminal according to claim 24 and the network device according to claim 25.

27. A computer-readable storage medium, storing a computer program instruction, wherein when the program instruction is executed by one or more processing device, steps of the method according to any one of claims 1-21 are implemented.

FIG. 1

| Receive a low-power wake-up signal sent by a network device | S110 |

| Determine a generation sequence of the low-power wake-up signal | S120 |

FIG. 2

| Acquire a configuration resource of a low-power wake-up signal sent by a network device | S210 |

| Determine a generation sequence of the low-power wake-up signal according to the configuration resource of the low-power wake-up signal | S220 |

FIG. 3

Acquire a configuration resource of a low-power reference signal sent by a network device ～S310

Determine a generation sequence of a low-power wake-up signal according to the configuration resource of the low-power reference signal ～S320

FIG. 4

Acquire a configuration resource of a low-power synchronization signal sent by a network device ～S410

Determine a generation sequence of a low-power wake-up signal according to the configuration resource of the low-power synchronization signal ～S420

FIG. 5

Receive first signaling sent by a network device ～S510

Determine a generation sequence of a low-power wake-up signal according to sequence index information ～S520

FIG. 6

| Receive second signaling sent by a network device | ⌇S610 |
|---|---|

↓

| Determine a generation sequence of a low-power wake-up signal according to sequence indication information | ⌇S620 |
|---|---|

FIG. 7

| Receive a low-power synchronization signal sent by a network device, and determine a synchronization sequence corresponding to the low-power synchronization signal | ⌇S710 |
|---|---|

↓

| Determine a generation sequence of a low-power wake-up signal corresponding to the synchronization sequence | ⌇S720 |
|---|---|

FIG. 8

| Determine a synchronization sequence corresponding to a synchronization field of a low-power wake-up signal | ⌇S810 |
|---|---|

↓

| Determine a generation sequence of the low-power wake-up signal corresponding to the synchronization sequence | ⌇S820 |
|---|---|

FIG. 9

Receive a low-power reference signal sent by a network device, and determine a reference sequence corresponding to the low-power reference signal ~ S910

↓

Determine a generation sequence of a low-power wake-up signal corresponding to the reference sequence ~ S920

FIG. 10

Determine a reference sequence corresponding to a reference field of a low-power wake-up signal ~ S1010

↓

Determine a generation sequence of the low-power wake-up signal corresponding to the reference sequence ~ S1020

FIG. 11

Receive a low-power wake-up signal sent by a network device ~ S1110

↓

Determine a generation sequence of the low-power wake-up signal ~ S1120

↓

Adjust an energy threshold of a reference signal according to the generation sequence of the low-power wake-up signal ~ S1130

FIG. 12

| Send a low-power wake-up signal to a terminal | ⌇S1210 |

**FIG. 13**

| Signal sequence determination apparatus | ⌇1300 |
| Receiving module | ⌇1310 |
| Processing module | ⌇1320 |

**FIG. 14**

| Signal sequence determination apparatus | ⌇1400 |
| Sending module | ⌇1410 |

**FIG. 15**

1504          1502          1500

```
┌──────────┐        ┌─────────────┐          ┌──────────────┐
│  First   │◄──────►│    First    │          │              │
│  memory  │        │ processing  │          │              │
└──────────┘        │ component   │          │ Communication│
                    │             │◄────────►│  component   │
1506                │             │          │              │
┌──────────┐        │             │          └──────────────┘
│First power│◄─────►│             │                      1516
│ component │       │ ┌─────────┐ │
└──────────┘        │ │  First  │ │
                    │ │processor│ │
1508                │ └─────────┘ │                  1514
┌──────────┐        │             │          ┌──────────────┐
│Multimedia│◄──────►│    1520     │          │              │
│component │        │             │          │    Sensor    │
└──────────┘        │             │◄────────►│  component   │
                    │             │          │              │
1510                │             │          └──────────────┘
┌──────────┐        │             │
│  Audio   │◄──────►│             │
│component │        └──────┬──────┘
└──────────┘               │
                    ┌──────▼──────┐
                    │First input/ │
                    │output       │
                    │interface    │
                    └──────┬──────┘
                           │
                          1512
```

FIG. 16

1600

```
┌──────────────────────────────────────────────┐
│      ┌──────────┐  ┌──────────┐                │
│      │ Second   │  │ Second   │                │
│1622  │processing│  │  power   │  1626          │
│      │component │  │component │                │
│      └────┬─────┘  └────┬─────┘                │
│           │             │                      │
│      ┌────┴─────┐  ┌────┴─────┐                │
│1632  │ Second   │  │ Network  │  1650          │
│      │ memory   │  │interface │◄──►            │
│      └──────────┘  └──────────┘                │
│                                                │
│                    ┌──────────┐                │
│                    │ Second   │  1658          │
│                    │input/output│◄──►          │
│                    │ interface │               │
│                    └──────────┘                │
└──────────────────────────────────────────────┘
```

FIG. 17

## INTERNATIONAL SEARCH REPORT

| International application No. |
| --- |
| **PCT/CN2023/076632** |

| A. | CLASSIFICATION OF SUBJECT MATTER |
| --- | --- |

H04W52/02(2009.01)i

According to International Patent Classification (IPC) or to both national classification and IPC

| B. | FIELDS SEARCHED |
| --- | --- |

Minimum documentation searched (classification system followed by classification symbols)

IPC:H04W,H04L,H04B

Documentation searched other than minimum documentation to the extent that such documents are included in the fields searched

Electronic data base consulted during the international search (name of data base and, where practicable, search terms used)

CNTXT, CNABS, PATENTICS, VEN, DWPI, WPABS, WPABSC, 3GPP: 低功耗, 功耗, 唤醒信号, 确定, 序列, 资源, 时域, 频域, 接收, consumption, low, power, signal, up, wake, WUS, confirm+, awake+, determin+

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 114208301 A (HUAWEI TECHNOLOGIES CO., LTD.) 18 March 2022 (2022-03-18) abstract, and claims 1-39 | 1, 13, 22-27 |
| A | CN 111148191 A (SPREADTRUM COMMUNICATIONS (SHANGHAI) CO., LTD.) 12 May 2020 (2020-05-12) abstract, and claims 1-48 | 1-27 |
| A | CN 109586840 A (ZHUHAI MEIZU TECHNOLOGY CO., LTD.) 05 April 2019 (2019-04-05) entire document | 1-27 |
| A | CN 110463285 A (INTEL CORPORATION et al.) 15 November 2019 (2019-11-15) entire document | 1-27 |
| A | CN 110536230 A (ZTE CORP.) 03 December 2019 (2019-12-03) entire document | 1-27 |
| A | CN 114651483 A (LENOVO (BEIJING) CO., LTD.) 21 June 2022 (2022-06-21) entire document | 1-27 |

| ☑ Further documents are listed in the continuation of Box C. | ☑ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **03 November 2023** | **06 November 2023** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
| --- |
| **PCT/CN2023/076632** |

**C.     DOCUMENTS CONSIDERED TO BE RELEVANT**

| Category* | Citation of document, with indication, where appropriate, of the relevant passages | Relevant to claim No. |
| --- | --- | --- |
| A | CN 115499929 A (SPREADTRUM COMMUNICATIONS (SHANGHAI) CO., LTD.) 20 December 2022 (2022-12-20) <br> entire document | 1-27 |

Form PCT/ISA/210 (second sheet) (July 2022)

**INTERNATIONAL SEARCH REPORT**
Information on patent family members

International application No.

**PCT/CN2023/076632**

| Patent document cited in search report | | | Publication date (day/month/year) | Patent family member(s) | | | Publication date (day/month/year) |
|---|---|---|---|---|---|---|---|
| CN | 114208301 | A | 18 March 2022 | None | | | |
| CN | 111148191 | A | 12 May 2020 | US | 2021400585 | A1 | 23 December 2021 |
| | | | | WO | 2020088257 | A1 | 07 May 2020 |
| | | | | EP | 3876609 | A1 | 08 September 2021 |
| | | | | EP | 3876609 | A4 | 22 December 2021 |
| CN | 109586840 | A | 05 April 2019 | None | | | |
| CN | 110463285 | A | 15 November 2019 | US | 2020029302 | A1 | 23 January 2020 |
| | | | | US | 11284372 | B2 | 22 March 2022 |
| | | | | WO | 2018175760 | A1 | 27 September 2018 |
| | | | | US | 2022201649 | A1 | 23 June 2022 |
| | | | | EP | 3603223 | A1 | 05 February 2020 |
| | | | | EP | 3603223 | A4 | 13 January 2021 |
| CN | 110536230 | A | 03 December 2019 | EP | 3860160 | A1 | 04 August 2021 |
| | | | | EP | 3860160 | A4 | 15 June 2022 |
| | | | | AU | 2019348116 | A1 | 27 May 2021 |
| | | | | AU | 2019348116 | B2 | 19 January 2023 |
| | | | | US | 2021360529 | A1 | 18 November 2021 |
| | | | | KR | 20210068091 | A | 08 June 2021 |
| | | | | KR | 102480135 | B1 | 22 December 2022 |
| | | | | WO | 2020063768 | A1 | 02 April 2020 |
| CN | 114651483 | A | 21 June 2022 | None | | | |
| CN | 115499929 | A | 20 December 2022 | None | | | |

Form PCT/ISA/210 (patent family annex) (July 2022)